# EUROPEAN PATENT SPECIFICATION

(11) **EP 2 050 373 B1**
(45) Date of publication and mention of the grant of the patent: **12.05.2010**
(21) Application number: 08166534.1
(22) Date of filing: 14.10.2008
(51) Int. Cl.: A47J 37/12

(54) **Device for controlling the level of a cooking liquid in an apparatus for cooking food**
Vorrichtung zum Steuern des Stands einer kochenden Flüssigkeit in einer Vorrichtung zum Kochen von Lebensmitteln
Dispositif de contrôle du niveau d'un liquide cuisant et appareil de cuisson d'aliment

(30) Priority: 15.10.2007 IT MO20070316
(43) Date of publication of application: 22.04.2009
(73) Proprietor: ANGELO PO GRANDI CUCINE S.p.A., 41012 Carpi (MO) (IT)
(72) Inventor: Marenco, Guido, 41100, Modena (IT); Capriglione, Gerardo, 41012, Carpi (MO) (IT)
(74) Representative: Crugnola, Pietro

(56) References cited:
- FR-A- 2 697 985
- US-A- 6 057 772
- US-A1- 2003 047 084
- US-A1- 2004 112 225

## Description

The invention refers to a device for controlling the level of a cooking liquid in apparatuses for cooking food, such as, for example, apparatuses for cooking pasta or fryers.

Automatic apparatuses are known for cooking food that adopt devices for controlling the maximum level of the cooking liquid in a cooking receptacle, in a static manner.

In order to control and regulate the level of cooking liquid in the cooking receptacle mechanical, electromechanical or electronic devices can be used. These devices use known level sensor means such as, for example, but not exclusively, float level sensors, pressure switches or sensors with an immersed electrode.

A device for controlling the level of the cooking liquid can be placed in a recess that is hydraulically connected to the cooking receptacle so that, through the principle of communicating vessels, the level of liquid in the recess is the same as the level in the cooking receptacle.

In prior-art level-control devices two level sensors are generally used: a first sensor for detecting the maximum admissible level of the liquid in the cooking tank, that commands the arrest of the delivery of liquid into the cooking receptacle when said maximum admissible level is reached, and a second sensor for detecting the minimum level of said liquid, i.e. the level reached at which it is necessary to introduce new cooking liquid into the cooking tank.

In known prior-art devices, such as the one disclosed in document US-6057772, the position of the maximum and minimum level sensors is fixed, established by the manufacturer.

This brings about certain drawbacks: above all, the cooking receptacle always has to be filled up to the maximum level even when smaller quantities of food have to be cooked than the maximum amount for which the cooking apparatus was designed. This inevitably leads to wasting of cooking liquid, for example water, which we know is becoming more precious, and inevitable waste of energy (electric or gas) for boiling a mass of cooking liquid that is greater than what would be required for cooking the desired quantity of food.

Further, in known prior-art apparatuses it is not possible to steam foods using small quantities of water so that the free surface of the water is below the basket containing the foods to be cooked, even if this type of cooking is increasingly requested because it is considered to be one of the most healthy cooking methods. In fact, this cooking method preserves most of the nutritional properties of the food.

The present invention aims to remedy the aforesaid drawbacks.

According to the present invention a device is provided for controlling the level of a cooking liquid in a receptacle for cooking food, comprising a first sensor suitable for detecting a minimum level of said cooking liquid in said cooking receptacle, a second sensor suitable for detecting a maximum level of said cooking liquid in said receptacle, characterised in that it comprises position-varying means to modify the height position of said first sensor and of said second sensor with respect to said cooking receptacle.

Owing to the invention, it is possible to regulate, according to cooking needs, the maximum level of the liquid in the receptacle between an upper limit value and a lower limit value, which enables the quantity of cooking liquid to be delivered into the cooking receptacle to be regulated according to the quantity of food to be cooked, with consequent saving of cooking liquid and energy, when cooking quantities of food that are less than the maximum quantity for which the cooking apparatus has been designed is required.

The invention will be disclosed in detail below, by way of non-limitative example with reference to the attached drawings, in which:
Figure 1 is a container for cooking foods, associated with a recess in which the level-control device according to the invention is arranged;
Figure 2 is a detail of the level-control device according to the invention;
Figure 3 is a further partially sectioned and enlarged detail of the level-control device according to the invention;

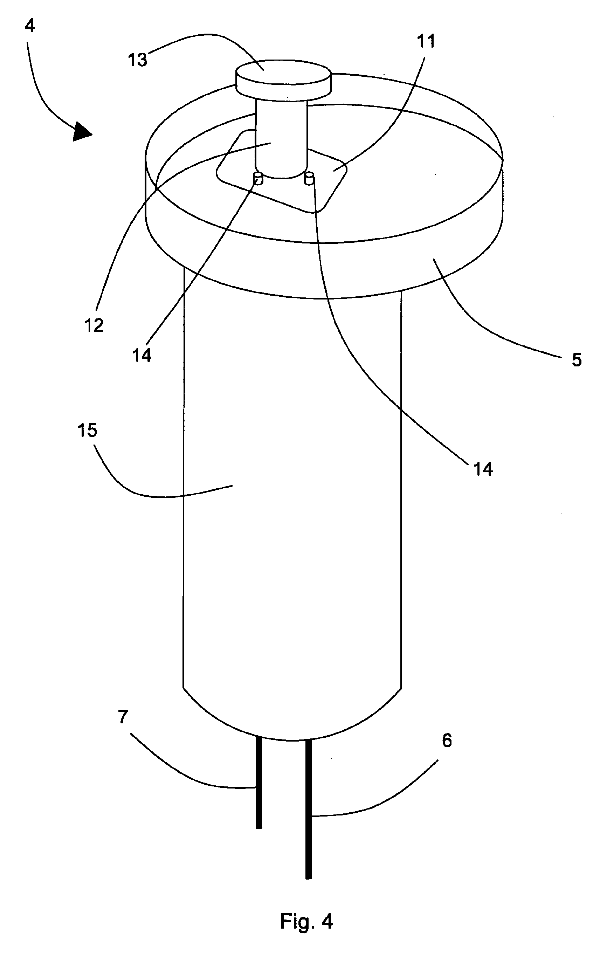

Figure 4 is a prospective view of the level-control device according to the invention.

In the following description reference will be made to level sensors consisting of immersed electrodes that drive liquid delivery valves in the cooking receptacle, but the operating principle is also applicable with regulating devices of different type, for example with float-level controllers.

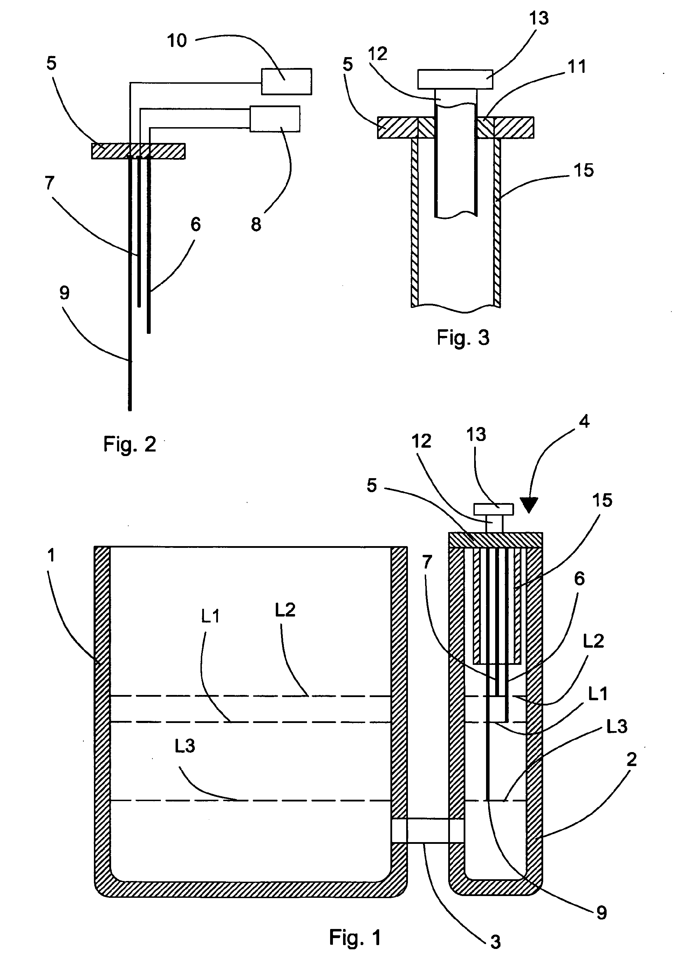

In figure 1 there is shown a receptacle 1 for cooking food with which an auxiliary receptacle 2 is associated, for example a recess, connected hydraulically, for example via a conduit 3, to the receptacle 1, so that the level of a liquid in the recess 2 is equal to the level of a liquid in the receptacle 1, because of the known principle of communicating vessels. A level-control device 4 according to the invention is associated with the recess 2, the level-control device comprises a lid 5 and a containing element 15 with which a first level sensor 6 and a second level sensor 7 are associated. The first level sensor 6 and the second level sensor 7 are operationally associated with command means 8, suitable for driving actuating means (not shown) arranged on a supply conduit (not shown) through which the cooking liquid is delivered into the receptacle 1; the actuating means is suitable for enabling, or preventing, the delivery of the cooking liquid into the receptacle through said supply conduit.

The first level sensor 6 and the second level sensor 7 have various lengths, with the first sensor 6 that has, for example, a greater length than the second sensor 7. In this manner the first sensor 6 comes into contact with the cooking liquid, when the liquid in the recess 2 and therefore in the receptacle 1, reaches a level L1, whilst the second sensor comes into contact with the cooking liquid when the latter reaches a level L2 that is greater than L1.

The device 4 can be provided with a third sensor 9 having a length that is greater than the length of the first sensor 6 and of the second sensor 7, so as to come into contact with the liquid when the latter reaches in the recess 2 a level L3 that is lower than both L1 and L2. The third sensor 9 is operationally associated with further command means 10 suitable for driving heating means (not shown) for heating the liquid delivered into the receptacle 1. The heating means may comprise, for example, a burner or electrical heating resistances.

The first sensor 6 and the second sensor 7 are fixed, at a respective end thereof, to a supporting element 11, coupled with a handling pivot 12, fixed to the lid 5 so as to be able to rotate, but not to be able to translate, with respect thereto.

The handling pivot 12 is provided with a driving knob 13. The supporting element 11 is coupled with the pivot 12 by means of a threaded coupling, so that, by rotating the pivot 12, the supporting element 11 can slide along the pivot 12 so as to vary the height position of the first sensor 6 and of the second sensor 7 between a respective maximum value and a respective minimum value. The handling pivot 12 can be driven manually by acting on the knob 13, or by means of an actuating means, not shown, for example an electric motor. In this case it is possible to enable different filling levels of the receptacle 1 automatically according to possible programs and methods set for the desired cooking process.

The third sensor 9 is fixed directly to the lid 5, so that the position thereof is fixed.

It is also possible to provide a plurality of pairs of first and second sensors that are positionable at different heights, at least one of said pairs being able to be enabled in association with an automatic program for managing the cooking process. This enables even greater flexibility to be obtained in regulating minimum and maximum levels of the liquid in the cooking receptacle.

The device according to the invention operates in this manner: before starting cooking, the receptacle 1 is filled, enabling the cooking liquid to be dispensed through the supply conduit. If there is a third sensor 9, when the cooking liquid in the receptacle 1 reaches the level L3, coming into contact with the third sensor 9, the latter, through the further command means 10, controls switching on of the heating means, to start heating of the cooking liquid in the receptacle 1. If there is no third sensor 9, switching on of the heating means can be commanded, for example after a preset time has elapsed from the start of filling of the cooking receptacle 1.

When the liquid delivered into the receptacle 1 reaches level L2, corresponding to the maximum level desired and comes into contact with the second sensor 7, the latter sends a signal to the command means 8, which interrupts dispensing of the cooking liquid to the receptacle 1, whilst the process of heating the cooking liquid continues. When boiling point is reached the food to be cooked is placed in the cooking receptacle 1, for example by placing the food to be cooked inside a basket that is placed in the receptacle 1, to start cooking. During cooking, the level of the cooking liquid in the receptacle 1 will start to drop through the effect of evaporation until it falls below the level L1 corresponding to the level at which the free end of the first sensor 6 is located. At this point the first sensor 6 will send a signal to the first command means 8 that will enable delivery of further cooking liquid into the receptacle 1 until the level L2 is reached. Each time that the level of the cooking liquid in the receptacle 1 falls below the level L1, a top-up of the cooking liquid will thus be activated automatically. In this manner, during the cooking process, the level of the liquid in the receptacle 1 will vary between a minimum value L1 and a maximum value L2. The aforesaid levels L1 and L2 can be adjusted by varying the height position of the first sensor 6 and of the second sensor 7 by means of the handling pivot 12. For example, if the quantity of food that has to be cooked is less than the maximum quantity that can be cooked in the receptacle 1, the levels L1 and L2 can be reduced so as to use a smaller quantity of cooking liquid compared with the quantity of food to be cooked, with a saving in the cooking liquid and energy necessary for heating the water.

This is a significant advantage over the known cooking apparatuses of the prior art in which the position of the maximum and minimum level sensors is fixed, with the consequence that the cooking receptacle 1 always has to be filled to the maximum level L2, even when the quantity of food to be cooked is less than the maximum allowed quantity. If steaming the food is required, the levels L1 and L2 can be regulated so that the cooking liquid does not come into contact with the food, i.e. by ensuring that the maximum level L2 is less than the level at which the basket containing the food is located.

This is not possible in prior-art apparatuses, in which the position of the maximum and minimum level sensors is fixed.

The use of the first sensor 6 and of the second sensor 7 to define a maximum L2 and minimum level L1 of the liquid in the cooking receptacle 1 has the advantage of avoiding the effect of instant level variations (wave effect) that would cause frequent excitation and deexcitation of the command means 8, that would occur if only one sensor were used for the maximum level of the cooking liquid. This enables possible problems of long-term reliability in the supply system of the cooking liquid to the cooking receptacle 1 to be avoided.

## Claims

1. Device (4) for controlling the level of a cooking liquid in a receptacle (1) for cooking food, comprising a first sensor (6) suitable for detecting a minimum level (L1) of said cooking liquid in said cooking receptacle (1), a second sensor (7) suitable for detecting a maximum level (L2) of said cooking liquid in said cooking receptacle (1), **characterised in that** it comprises position-varying means (11, 12, 13) to modify the height position of said first sensor (6) and of said second sensor (7) with respect to said receptacle (1).

2. Device (4) according to claim 1, wherein said first sensor (6) and said second sensor (7) are operationally associated with command means (8) suitable for enabling or disabling a supply of said cooking liquid to said cooking receptacle (1).

3. Device (4) according to claim 1, or 2, wherein said first sensor (6) and said second sensor (7) are arranged in an auxiliary receptacle (2) connected hydraulically to said cooking receptacle (1).

4. Device (4) according to any preceding claim, further comprising a third sensor (9) suitable for detecting a further level (L3) of cooking liquid in said cooking receptacle (1), said further level (L3) being lower than said minimum level (L1).

5. Device (4) according to any preceding claim, wherein said first sensor (6), said second sensor (7), and said third sensor (9) comprise immersion electrodes.

6. Device (4) according to any one of claims 1 to 4, wherein said first sensor (6), said second sensor (7) and said third sensor (9) comprise float sensor means.

7. Device (4) according to any one of claims 4 to 7, further comprising further command means (10) suitable for enabling or disabling heating means for heating said cooking liquid in said cooking receptacle (1).

8. Device (4) according to any one of claims 3 to 7, wherein said position-varying means (11, 12, 13) comprises supporting means (11) to which is fixed an end of said first sensor (6) and of said second sensor (7), said supporting means (11) being associated with lid means (5) that is couplable with said auxiliary receptacle (2), said supporting means (11) being suitable for translating in a direction that is substantially vertical with respect to said lid means (5).

9. Device (4) according to claim 8, wherein said supporting means (11) is coupled with pivot means (12), so as to be able to translate in a direction that is substantially vertical with respect to said pivot means (12), said pivot means (12) being fixed to said lid means (5) so as to be able to rotate, but not to be able to translate in relation thereto.

10. Device (4) according to claim 9, wherein said supporting means (11) is coupled with said pivot means (12) by means of a threaded coupling.

11. Device (4) according to claim 9, or 10, wherein said pivot means (12) is provided with a driving knob (13).

12. Device (4) according to claim 9, or 10, wherein said pivot means (12) is associated with actuating means suitable for rotating said pivot means (12).

13. Device (4) according to any preceding claim, comprising a plurality of pairs of sensors, each of which comprises a said first sensor (6) and a said second sensor (7), at least one of said pairs being enableable, whilst the remaining pairs remain inactive.

14. Apparatus for cooking food comprising a receptacle (1) for cooking said food by means of a cooking liquid, **characterised in that** it comprises a device (4) for controlling the level of said cooking liquid in said receptacle, according to any one of claims 1 to 13.

## Patentansprüche

1. Vorrichtung (4) zum Steuern des Füllstands einer Garflüssigkeit in einem Behälter (1) zum Garen von Lebensmitteln, mit einem ersten Sensor (6), der zum Erfassen eines Minimum-Füllstands (L1) der Garflüssigkeit in dem Garbehälter (1) geeignet ist, einem zweiten Sensor (7), der zum Erfassen eines Maximum-Füllstands (L2) der Garflüssigkeit in dem Garbehälter (1) geeignet ist, **dadurch gekennzeichnet, dass** sie positionsverändernde Mittel (11, 12, 13) aufweist, um die Höhenposition des ersten Sensors (6) und des zweiten Sensors (7) bezüglich des Behälters (1) zu modifizieren.

2. Vorrichtung (4) nach Anspruch 1, wobei der erste Sensor (6) und der zweite Sensor (7) mit Steuerbefehlmitteln (8) in Wirkverbindung stehen, die zum Einschalten oder Ausschalten einer Zufuhr der Garflüssigkeit in den Garbehälter (1) geeignet sind.

3. Vorrichtung (4) nach Anspruch 1 oder 2, wobei der erste Sensor (6) und der zweite Sensor (7) in einem Zusatzbehälter (2) angeordnet sind, der mit dem Garbehälter (1) hydraulisch verbunden ist.

4. Vorrichtung (4) nach irgendeinem vorhergehenden Anspruch, weiterhin mit einem dritten Sensor (9), der zum Erfassen eines weiteren Füllstands (L3) der Garflüssigkeit in dem Garbehälter (1) geeignet ist, wobei der weitere Füllstand (L3) niedriger ist als der Minimum-Füllstand (L1).

5. Vorrichtung (4) nach irgendeinem vorhergehenden Anspruch, wobei der erste Sensor (6), der zweite Sensor (7) und der dritte Sensor (9) Tauchelektroden aufweisen.

6. Vorrichtung (4) nach irgendeinem der Ansprüche 1 bis 4, wobei der erste Sensor (6), der zweite Sensor (7) und der dritte Sensor (9) Schwimmsensormittel aufweisen.

7. Vorrichtung (4) nach irgendeinem der Ansprüche 4 bis 7, weiterhin mit weiteren Steuerbefehlmitteln (10), die zum Einschalten oder Ausschalten von Heizmitteln zum Erwärmen der Garflüssigkeit in dem Garbehälter (1) geeignet sind.

8. Vorrichtung (4) nach irgendeinem der Ansprüche 3 bis 7, wobei die positionsverändernden Mittel (11, 12, 13) Haltemittel (11) aufweisen, an denen ein Ende des ersten Sensors (6) und des zweiten Sensors (7) festgelegt ist, wobei die Haltemittel (11) mit Deckelmitteln (5) in Verbindung stehen, die mit dem Zusatzbehälter (2) koppelbar sind, wobei die Haltemittel (11) dazu geeignet sind, sich in einer Richtung, die im Wesentlichen vertikal bezüglich der Deckelmittel (5) ist, translatorisch zu bewegen.

9. Vorrichtung (4) nach Anspruch 8, wobei die Haltemittel (11) mit Drehmitteln (12) gekoppelt sind, um in der Lage zu sein, sich in einer Richtung translatorisch zu bewegen, die im Wesentlichen vertikal bezüglich der Drehmittel (12) ist, wobei die Drehmittel (12) an den Deckelmitteln (5) festgelegt sind, um in der Lage zu sein, sich zu drehen, jedoch nicht in der Lage zu sein, sich relativ dazu translatorisch zu bewegen.

10. Vorrichtung (4) nach Anspruch 9, wobei die Haltemittel (11) mit den Drehmitteln (12) mittels einer mit Gewinde versehenen Kupplung gekoppelt sind.

11. Vorrichtung (4) nach Anspruch 9 oder 10, wobei die Drehmittel (12) mit einem Stellknopf (13) versehen sind.

12. Vorrichtung (4) nach Anspruch 9 oder 10, wobei die Drehmittel (12) mit Betätigungsmitteln in Verbindung stehen, die zum Drehen der Drehmittel (12) geeignet sind.

13. Vorrichtung (4) nach irgendeinem vorhergehenden Anspruch, mit einer Vielzahl von Sensorpaaren, von denen jedes einen ersten Sensor (6) und einen zweiten Sensor (7) aufweist, wobei zumindest eines der Paare einschaltbar ist, während die übrigen Paare inaktiv bleiben.

14. Gerät zum Garen von Lebensmitteln, mit einem Behälter (1) zum Garen der Lebensmittel mittels einer Garflüssigkeit, **dadurch gekennzeichnet, dass** es eine Vorrichtung (4) zum Steuern des Füllstands der Garflüssigkeit in dem Behälter gemäß irgendeinem der Ansprüche 1 bis 13 aufweist.

## Revendications

1. Dispositif (4) pour contrôler le niveau d'un liquide de cuisson dans un récipient (1) de cuisson d'aliments, comprenant un premier capteur (6) apte à détecter un niveau minimal (L1) dudit liquide de cuisson dans ledit récipient (1) de cuisson, un deuxième capteur (7) apte à détecter un niveau maximal (L2) dudit liquide de cuisson dans ledit récipient de cuisson (1), ***caractérisé en ce qu*'**il comprend des moyens (11, 12, 13) de modification de position pour modifier la position en hauteur dudit premier capteur (6) et dudit deuxième capteur (7) par rapport audit récipient (1).

2. Dispositif (4) selon la revendication 1, dans lequel ledit premier capteur (6) et ledit deuxième capteur (7) sont opérationnellement associés à des moyens de commande (8) aptes à permettre ou à empêcher un approvisionnement dudit récipient (1) de cuisson en dit liquide de cuisson.

3. Dispositif (4) selon la revendication 1 ou 2, dans lequel ledit premier capteur (6) et ledit deuxième capteur (7) sont situés dans un récipient auxiliaire (2) relié hydrauliquement audit récipient de cuisson (1).

4. Dispositif (4) selon l'une quelconque des revendications précédentes, comprenant de plus un troisième capteur (9) apte à détecter un autre niveau (L3) du liquide de cuisson dans ledit récipient (1) de cuisson, ledit autre niveau (L3) étant inférieur audit niveau minimal (L1).

5. Dispositif (4) selon l'une quelconque des revendications précédentes, dans lequel ledit premier capteur (6), ledit deuxième capteur (7), et ledit troisième capteur (9) comprennent des électrodes à immersion.

6. Dispositif (4) selon l'une quelconque des revendications 1 à 4, dans lequel ledit premier capteur (6), ledit deuxième capteur (7), et ledit troisième capteur (9) comprennent des moyens de capteur flottant.

7. Dispositif (4) selon l'une quelconque des revendications 4 à 7, comprenant de plus des moyens de commande (10) aptes à permettre ou à empêcher des moyens chauffants de chauffer ledit liquide de cuisson dans ledit récipient (1) de cuisson.

8. Dispositif (4) selon l'une quelconque des revendications 3 à 7, dans lequel lesdits moyens (11, 12, 13) de modification de position comprennent des moyens de support (11) auxquels sont fixées une extrémité dudit premier capteur (6) et une extrémité dudit deuxième capteur (7), lesdits moyens de support (11) étant associés à des moyens de couvercle (5) qui peuvent être accouplés audit récipient auxiliaire (2), lesdits moyens de support (11) étant aptes à un mouvement de translation dans une direction qui est sensiblement verticale auxdits moyens de couvercle (5).

9. Dispositif (4) selon la revendication 8, dans lequel lesdits moyens de support (11) sont couplés à des moyens de pivot (12) afin d'être aptes à un mouvement de translation dans une direction qui est sensiblement verticale auxdits moyens de pivot (12), lesdits moyens de pivot (12) étant fixés auxdits moyens de couvercle (5) afin d'être aptes à tourner, mais sans être aptes à un mouvement de translation par rapport à ceux-ci.

10. Dispositif (4) selon la revendication 9, dans lequel lesdits moyens de support (11) sont accouplés auxdits moyens de pivot (12) au moyen d'un raccord à vis.

11. Dispositif (4) selon la revendication 9 ou 10, dans lequel lesdits moyens de pivot (12) sont munis d'un bouton de commande (13).

12. Dispositif (4) selon la revendication 9 ou 10, dans lequel lesdits moyens de pivot (12) sont associés à des moyens d'actionnement aptes à faire tourner lesdits moyens de pivot (12).

13. Dispositif (4) selon l'une quelconque des revendications précédentes, comprenant une pluralité de paires de capteurs, chacune comprenant un dit premier capteur (6) et un dit deuxième capteur (7), au moins l'une desdites paires pouvant être mise en fonction pendant que les autres paires demeurent inactives.

14. Appareil de cuisson d'aliments comprenant un récipient (1) pour cuire lesdits aliments au moyen d'un liquide de cuisson, ***caractérisé en ce qu*'**il comprend un dispositif (4) pour contrôler le niveau dudit liquide de cuisson dans ledit récipient, selon l'une quelconque des revendications 1 à 13.
